Europäisches Patentamt

European Patent Office

Office européen des brevets

(19)

(11) **EP 1 583 314 A2**

(12) **EUROPEAN PATENT APPLICATION**

(43) Date of publication:
**05.10.2005 Bulletin 2005/40**

(51) Int Cl.7: **H04L 29/06**

(21) Application number: **05007039.0**

(22) Date of filing: **31.03.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **01.04.2004 IL 16121704**

(71) Applicant: **Ectel Ltd.**
**Petach Tikva 49517 (IL)**

(72) Inventor: **Golobrodsky, Oleg**
**Petach-Tikva 49522 (IL)**

(74) Representative: **Modiano, Guido et al**
**Modiano, Josif, Pisanty & Staub Ltd.,**
**Baaderstrasse 3**
**80469 München (DE)**

(54) **Detection of outliers in communication networks**

(57) A method for detecting an outlier in a communication network, which comprises providing a first plurality of objects associated with a plurality of users, classifying this first plurality of objects in accordance with one or more pre-determined classification parameters. Based on the classifications, associating each of the first plurality of objects with at least one group selected from among a second plurality of groups, so that each group out of the second plurality of groups, comprises objects that have essentially similar classification parameters. Then, associating objects belonging to at least two of the second plurality of groups with one or more pre-determined characterization parameters and identifying outlier objects in the at least two of the second plurality of groups.

EP 1 583 314 A2

## Description

## FIELD OF THE INVENTION

The present invention relates in general to telecommunication systems and methods for their management, and particularly to systems and methods for identifying certain individuals among a plurality of telecommunication users.

## BACKGROUND OF THE INVENTION

Survival of service or content providers depends on their ability of both deliver new products and services and to protect themselves from occasional and/or routine attempts to avoid paying in any way possible from any side involved: customers, business partners, insiders, etc. Those attempts are called fraudulent activity, or, more often, a fraud.

Modern market conditions demand more adequate means of fraud prevention, detection and protection.

To prevent fraud usually means to provide the ability to predict customer's or system's behavior on earlier stages of fraudulent or any non-standard or abnormal activity to block such an activity, and, thus, to minimize losses. One of the means of fraud prevention could be analysis on rare, i.e. detection and analysis of very rare and usually abnormal situations.

Various methods were proposed in the past to provide a solution in the attempt to prevent fraudulent events to take place. Among such proposals is the Applicant's published copending application US 2003-0110385 which describes a method for detecting a behavior of interest in telecommunications networks, where the method is based on analyzing the behavior of interest by building a characterizing data string which comprises two or more data sub-strings characterizing fragments of the behavior of interest.

However, the typical prior art solutions provided are targeted towards identifying a fraudulent event being in progress and handle it accordingly, but are not catered to provide a solution whereby the system is triggered upon detecting a subscriber's behavior which is a somewhat different behavior than that of a group with which that subscriber is associated. Thus, one of the disadvantages for the prior art solutions is their lack of ability to adequately identify a potential fraud and allow proper acting to prevent its occurrence.

In statistics analysis a use of concept named outlier is known. By this concept, one may single out an observation that deviates substantially from other observations, e.g. in data mining, in order to identify problems existing in the data itself. Such a concept is described for example in D.M. Hawkins, "Identification of outliers", Chapman & Hall. London, 1980; K. Yamanishi, J. Takeuchi, G. Williams, "On-line unsupervised outlier detection using finite mixtures with discounting learning algorithms", Conference on Knowledge Discovery in Data Proceedings of the sixth ACM SIGKDD international conference on Knowledge discovery and data mining, Boston, Massachusetts, United States, pp. 320 - 324, (2000); S. Hawkins, et al., "Outlier detection using replicator neural networks" Lecture Notes In Computer Science Proceedings of the 4th International Conference on Data Warehousing and Knowledge Discovery, pp. 170 - 180, (2002), Springer-Verlag London, UK.

Two main models are used in the art for outlier detection. Both these models rely on a one-step outlier detection process. The first is the distribution-based model, while the other is the distance-based model. In distribution-based models, a score is given to the datum based on the model learnt, while a high score indication is associated with a data possibility being a statistical outlier. In distance-based models, a distance metrics is used, such as Mahalanobis distance or Eucledian distance, and a possibility of an outlier result is determined by its distance from other results. As could be appreciated by those skilled in the art, an outlier factor would usually be a function depending on the reconstruction errors.

US 20030004902A1 discloses a device for outlier for detecting abnormal data in a data set which includes an outlier rule preservation unit for holding a set of rules characterizing abnormal data, a filtering unit for determining whether each data of the data set is abnormal data or not based on the rules held in the outlier rule preservation unit, a degree of outlier calculation unit for calculating a degree of abnormality with respect to each data determined not to be abnormal data, a sampling unit for sampling each data calculated as an outlier, and a supervised learning unit for generating a new rule characterizing abnormal data by supervised learning based on a set of the respective data and adding the new rule to update the rules.

US 6643629 discloses a method for identifying outliers in large data sets. The data points of interest are ranked in relation to the distance to their neighboring points. The method employs algorithms to partition the data points and then compute upper and lower bounds for each partition. These bounds are then used to eliminate those partitions that do contain the predetermined number of data points of interest. The data points of interest are then computed from the remaining partitions that were not eliminated. The method described in this publication, eliminates a significant number of data points from consideration as the points of interest, thereby resulting in savings in computational resources.

However, such models are not adequate for use in communication networks, where the detection of an outlier in real-time operating networks should be made as early as possible e.g. in order to identify an outlier at an early stage, to minimize the possible damages that such an outlier can cause.

The disclosures of all references mentioned above and throughout the present specification are hereby incorporated herein by reference.

## SUMMARY OF THE INVENTION

It is therefore an object of the present invention to provide a method for detecting outliers operative in communication networks.

It is yet another object of the present invention to provide a computer program capable of carrying out outlier identification in telecommunication networks and a carrier medium comprising such a computer program.

Other objects of the invention will become apparent as the description of the invention proceeds.

Typically, when trying to detect fraudulent event, such a detection would rely on the fact that there is one or more characteristics associated with a certain object that are different than the normal behavior and that may trigger the system to suspect that a fraudulent event is being in progress. The problem with which the present invention is mainly concerned, is, how to enable focusing on an object associated with a user that does not demonstrate any characteristics that are different than the normal behavior, which means that the system shall not be alerted, but still, the behavior of the user associated with the outlier object is such that would not be expected from the group of objects to which the outlier object belongs.

Thus, according to a first embodiment of the present invention, there is provided a method for detecting an outlier in a communication network, which network comprises:

(i) providing a first plurality of objects associated with a plurality of users;
(ii) classifying said first plurality of objects in accordance with one or more pre-determined classification parameters;
(iii) based on the classifications carried in accordance with step (ii), associating each of said first plurality of objects with at least one group selected from among a second plurality of groups, so that each of the groups comprises one or more objects having essentially similar classification parameters;
(iv) associating the objects of at least two groups with one or more pre-determined characterization parameters;
(v) identifying outlier object(s) in the at least two groups.

In other words, by the second step of the method provided, the object (e.g. a record) is classified by associating it with one or a set of chosen characterizing parameters (classification parameters). For example, this classification can be made based on some parameters associated with customer details.

According to a preferred embodiment of the present invention, each of the groups included in that second plurality of groups is associated with at least some classification parameters that are different from those associated with any of the other groups.

By yet another alternative embodiment, at least one of the groups included in the second plurality of groups, comprises at least one classification parameter that is also associated with at least one of the other groups. Preferably, a different range is set for the at least one classification parameter for each of the groups that the at least one classification parameter is associated with.

Next, at step (iii), the classification made is used to match the object with a group, where the other members of that group are objects having essentially similar characteristics to each other, and preferably, but not necessarily, different by one or more characteristics from members belonging to the other groups. Once the objects are thus divided into more or less homogenous groups, another classification process is applied on at least two of these homogenous groups. In this step, various characterization parameters may be applied. The following are some examples of such characterization parameters: ratio between incoming to outgoing calls, number of calls per unit of time to certain destinations, etc.

- incoming calls: their duration, number of calls per unit of time, accumulative price, etc.;
- outgoing calls: their duration, number of calls per unit of time, accumulative price, etc.;
- unknown direction calls (calls for which no originator is specified): their duration, number of calls per unit of time, accumulative price, etc.;
- ratio between the number of incoming and outgoing calls;
- ratio between the number of incoming calls and unknown direction calls;
- ratio between the number of outgoing calls and unknown direction calls; and the like.

At the next step, a determination is made whether there is an outlier among the groups processed, and if so, which of the objects in that group. As will be appreciated by those skilled in the art, any one of a number of approaches may be chosen to make such a determination, and all of these approaches should be understood as being encompassed by the present invention.

Preferably, the identification is made based on the statistical distances of one or more of the object's characterization parameters from the group averaged value of each corresponding parameter. The advantage of applying statistical distances rather than for example the parameters themselves, is, that the results are obtained as normalized scores, irrespective of the actual parameters' value, which is rather helpful when one is to rely on a combination of characterization parameters in determining whether a certain object is an outlier or not.

Therefore, according to a preferred embodiment of the invention, the step of identification comprises calculating a statistical distance of at least one of the characterization parameters of an object from the group averaged value of the at least one characterization parameter. Preferably, the step of identification further comprises calculating a statistical distance for each of the remaining characterization parameters in other sets.

By yet another embodiment of the invention, the step of calculating a statistical distance for each of the remaining characterization parameters, further comprises applying linear regression to the set of distances and obtaining a score for a respective object. In the alternative, the step of calculating a statistical distance for each of the remaining characterization parameters, further comprises applying a neural network model to the set of distances and obtaining a score for a respective object.

According to still another preferred embodiment, the method provided further comprises comparing the score obtained for an object with a pre-defined sensitivity threshold and established whether the object associated with that score should be identified as an outlier. For example, when a sensitivity threshold is defined as N% of the group population, and the score calculated for a certain object is among the scores calculated for a group of N% objects having the highest distances from the group centroid, the object is considered to be associated with an outlier.

## DETAILED DESCRIPTION OF THE INVENTION

The present invention will be understood and appreciated more fully from the following detailed example.

In order to improve the management of communication networks, the present invention provides a solution relying on the use of analysis of rare events, i. e. detection and analysis of rare abnormal situations. Such an analysis is referred to herein as outlier detection.

In accordance with the present invention, the information about the customer's and/or the system's behavior (i.e. usage information, customer details, billing information, history, etc.) is used to determine centroid (e.g. average) behaviors in groups to which the customers belong, which in turn is used to determine the distance of a record associated with a customer from that average, and a customer is considered to be an outlier when having a reasonably high score.

By an embodiment of the invention the distance measure is based on using Z-score as the distance measure. Z-score is the number of standard deviations between the current object and its cluster's centroid,

i.e. $Z_i = \frac{x_i - \bar{x}}{std(x)}$, where

$Z_i$ - Z-score for $i^{th}$ variable,

$x_i$ - current value of $i^{th}$ variable,

$x, std(x)$ - an average value and standard deviation for $i^{th}$ variable accordingly.

In addition, in the example described herein, the sensitivity threshold is chosen as a percentage of the population (of the objects).

To determine the score, the following procedures were performed:

1. Preliminary stage:

   a. Choosing a study data set.
   b. Defining a sensitivity threshold, T, for the specific set (e.g. 1-3% of the population that is farthest from the center of the group).

2. Learning phase (performed on the chosen study set):

   a. Splitting all possible groups of characteristics into two groups, e.g.: usage and customer details.
   b. Grading those groups into more detailed (D) and more general (G).
   c. Taking the G-group and applying the clustering algorithm to divide all the information into general populations.
   d. Obtaining cluster centroid for each population.
   e. Taking D-group and calculate Z-score for each of the characteristics in it, according to the cluster centroid in the G-group.
   f. Running logistic regression model for Z-scores and storing the model.

3. Scoring phase (performed on new data records):

   a. Taking a current record.
   b. Determining cluster and corresponding cluster Cenroid.
   c. Selecting a number of characteristics out of the D-group and calculating Z-score for each of these characteristics.
   d. Running the stored model to obtain score.
   e. Focusing on a number of objects (wherein this number is determined by the sensitivity threshold selected) having a distance from the group centroid that is greater than the distance of any other object in that group which is not included among the focused-on objects. In other words, let us assume that the sensitivity threshold chosen is 3%. Therefore, 3% of the objects that belong to that group, which have the highest distance from the group centroid, would be considered to be associated with an outlier. According to an embodiment of the invention, different sensitivity threshold may be selected for different groups, preferably in accordance with the classification parameters of that group. In the alternative, one sensitivity threshold value may be associated with all the second plurality of groups.

One of the classification parameters that can be used in accordance with the present invention, is for classifying a group of "gold" customers, i.e. customers that would get a variety of free services, lower rate calls, requirement for post payment, etc. Naturally, if a fraud occurs when such an account is involved, the exposure of a telephone company to financial losses would be substantially higher than if it were a regular customer. Therefore, as will be appreciated by those skilled in the art, it would be highly advisable to use the solution provided by the present invention, while establishing at least one group having at least one classification parameter to include such "gold" customers.

It is to be understood that the above description is only of some embodiments of the invention and serves for its illustration. Numerous other ways of managing load developing in a telecommunication networks may be devised by a person skilled in the art without departing from the scope of the invention, and are thus encompassed by the present invention.

**Claims**

1. A method for detecting an outlier in a communication network, which method comprises:

   (i) providing a first plurality of objects associated with a plurality of users;
   (ii) classifying said first plurality of objects in accordance with one or more pre-determined classification parameters;
   (iii) based on said classifications, associating each of said first plurality of objects with at least one group selected from among a second plurality of groups, so that each group out of said second plurality of groups, comprises objects that have essentially similar classification parameters;
   (iv) associating objects belonging to at least two of said second plurality of groups with one or more pre-determined characterization parameters;
   (v) identifying outlier objects in said at least two of said second plurality of groups.

2. A method according to claim 1, wherein said classification parameters are parameters associated with customer details.

3. A method according to claim 1, wherein each of the groups included in said second plurality of groups is associated with at least some classification parameters that are different from those associated with any of the other groups.

4. A method according to claim 1, wherein at least one of the groups included in said second plurality of groups, comprises at least one classification parameter that is also associated with at least one of the other groups.

5. A method according to claim 4, wherein a different range is set for said at least one classification parameter for each of the groups that said at least one classification parameter is associated with.

6. A method according to claim 1, wherein said characterization parameter is a member selected from the group consisting of: ratio between incoming to outgoing calls and number of calls per unit of time to certain destinations.

7. A method according to claim 1, wherein said step of identification comprises calculating a statistical distance of at least one of said characterization parameters of an object from the group averaged value of said at least one characterization parameter.

8. A method according to claim 7, wherein said step of identification further comprises calculating a statistical distance for each of the remaining characterization parameters in other sets.

9. A method according to claim 8, wherein said step of calculating a statistical distance for each of the remaining characterization parameters, further comprises applying linear regression to said set of distances and obtaining a score for a respective object.

10. A method according to claim 8, wherein said step of calculating a statistical distance for each of the remaining characterization parameters, further comprises applying a neural network model to said set of distances and obtaining a score for a respective object.

11. A method according to claim 9, further comprising comparing said score fro a respective object with a pre-defined sensitivity threshold and established whether the object associated with said score is identified as an outlier.

12. A method according to claim 2, wherein the customer details are such that define records associated with gold customers.

13. A computer program comprising computer implementable instructions and/or data for carrying out a method according to claim 1.

**14.** A carrier medium comprising a computer program according to claim 13.